# EUROPÄISCHE PATENTSCHRIFT

(11) **EP 1 748 542 B1**
(45) Veröffentlichungstag und Bekanntmachung des Hinweises auf die Patenterteilung: **02.09.2009**
(21) Anmeldenummer: 05016578.6
(22) Anmeldetag: 29.07.2005
(51) Int. Cl.: H02M 7/42, H01M 8/04, H02J 9/06

(54) **Steuerverfahren für ein Brennstoffzellensystem sowie Brennstoffzellensystem**
Control method for a fuel cell system and fuel cell system
Procédé de commande pour un système de pile à combustible et système de pile à combustible

(43) Veröffentlichungstag der Anmeldung: 31.01.2007
(73) Patentinhaber: SIEMENS AKTIENGESELLSCHAFT, 80333 München (DE)
(72) Erfinder: Mattejat, Arno, Dr., 91056 Erlangen (DE); Stühler, Walter, 96114 Hirschaid (DE)

(56) Entgegenhaltungen:
- WO-A-96/18937
- WO-A-20/04084388
- DE-A1- 10 154 366
- CARRASCO J M ET AL: "MICROCOMPUTER CONTROL OF A FUEL CELL POWER SYSTEM" PROCEEDINGS OF THE INTERNATIONAL CONFERENCE ON INDUSTRIAL ELECTRONICS,CONTROL AND INSTRUMENTATION. (IECON). BOLOGNA, SEPT. 5 - 9, 1994. PLENARY SESSION POWER ELECTRONICS, NEW YORK, IEEE, US, Bd. VOL. 1 CONF. 20, 5. September 1994 (1994-09-05), Seiten 473-478, XP000528640 ISBN: 0-7803-1329-1

## Beschreibung

Die Erfindung betrifft ein Steuerverfahren für ein Brennstoffzellensystem gemäß Oberbegriff des Patentanspruchs 1 und ein Brennstoffzellensystem gemäß Oberbegriff des Patentanspruchs 5; ein derartiges Brennstoffzellensystem ist beispielsweise durch die EP 0 607 011 B1 bekannt.

In einer Brennstoffzelle wird üblicherweise durch die Zusammenführung von Wasserstoff und Sauerstoff in einer elektrochemischen Reaktion Energie und Wärme erzeugt, wobei als einziges Nebenprodukt Wasser entsteht. Eine Brennstoffzelle alleine liefert eine Betriebsspannung von unter einem Volt. Daher werden üblicherweise eine Vielzahl von Brennstoffzellen aufeinander gestapelt und zu einem Brennstoffzellenblock zusammengefasst. In der Fachliteratur wird ein solcher Block auch "Stack" genannt. Durch das In-Reihe-Schalten der Brennstoffzellen des Brennstoffzellenblocks kann die Betriebsspannung eines Brennstoffzellensystems einige 100 Volt betragen.

Die Brennstoffzellen an sich erzeugen prinzipbedingt nur eine Gleichspannung bzw. einen Gleichstrom. Soll ein Brennstoffzellenblock zur Spannungsversorgung eines Wechselstromnetzes genutzt werden, ist ein Wandler zur Umwandlung der Gleichspannung in eine Wechselspannung erforderlich. Ein Brennstoffzellensystem mit einem derartigen Wandler ist beispielsweise aus der EP 0 607 011 B1 bekannt. Der Wandler dient in diesem Fall zur Umwandlung einer Gleichspannung in eine Dreiphasen-Wechselspannung zur Spannungsversorgung eines Dreiphasen-Wechselstromnetzes. Hierbei wird die Netzspannung, - frequenz und -phase des Wechselstromnetzes erfasst, mit gespeicherten Referenzwerten verglichen und anhand der Differenz zwischen Istwerten und Referenzwerten die Amplitude, Frequenz und Phase der Ausgangsspannung des Wandlers derart gesteuert, dass sich eine gewünschte Spannung, Frequenz und Phase im Netz einstellt. Hierdurch kann bei Ausfall der Netzspannungsquelle eine Last im Netz ohne Unterbrechung durch die Brennstoffzellen gespeist werden.

Als problematisch erweist sich hierbei, wenn das Brennstoffzellensystem zur Spannungsversorgung unterschiedlicher Wechselstromnetze mit jeweils unterschiedlicher Nennspannung und Nennfrequenz benutzbar sein soll, so z.B. zur Speisung eines Netzes mit 115V, 60Hz, eines Netzes mit 230V, 50 Hz oder eines Netzes mit 400V, 50 HZ. Beispiele hierfür sind containerisierte, transportable Brennstoffzellensysteme, die zur zusätzlichen Bordnetzversorgung auf Schiffen genutzt werden sollen. Die genauen werte für die Netzspannung und Frequenz des Bordnetzes liegen dann im Brennstoffzellensystem nicht vor. Während bei starren Netzen eine korrekte Bestimmung der Netzspannung durch Messung der in dem Netz anliegenden Spannung meist möglich ist, ist dies bei weichen bzw. schwachen Netzen, bei denen die Netzspannung mit dem Netzstrom absinkt, nur eingeschränkt möglich.

Die WO 2004/084388 A2 offenbart ein Brennstoffzellensystem mit einer Brennstoffzelle zur Erzeugung einer Gleichspannung, einem Umrichter zur Umwandlung der Gleichspannung in eine Wechselspannung zur Spannungsversorgung eines Wechselstromnetzes und eine Steuereinrichtung zur Steuerung der von dem Umrichter erzeugten Wechselspannung. Die Steuerungseinrichtung erfasst hierbei über einen Transformator die Spannung des Netzes und steuert den Umrichter derart, dass er an seinem Ausgang eine Wechselspannung mit genau der Amplitude, Frequenz und Wellenform der Netzspannung erzeugt.

Ausgehend hiervon ist es Aufgabe vorliegender Erfindung, ein Steuerverfahren für ein Brennstoffzellensystem und ein Brennstoffzellensystems anzugeben, die es erlauben, ein Brennstoffzellensystem flexibel an unterschiedliche Wechselstromnetze anzupassen, wobei eine möglichst hohe Abgabe elektrischer Leistung an das jeweilige Wechselstromnetz bei gleich zeitigem Schutz der Brennstoffzellen vor Überlastung gewährleistet sein soll.

Die Lösung der auf das Steuerverfahren gerichteten Aufgabe gelingt erfindungsgemäß durch ein Steuerverfahren gemäß Patentanspruch 1. Die Lösung der auf das Brennstoffzellensystem gerichteten Aufgabe gelingt erfindungsgemäß durch ein Brennstoffzellensystem gemäß Patentanspruch 3. Vorteilhafte Ausgestaltungen sind jeweils Gegenstand der Unteransprüche.

Das erfindungsgemäße Steuerverfahren sieht vor, dass in einem ersten Schritt durch die Steuereinrichtung die Nennspannung des Wechselstromnetzes bestimmt wird. Dies kann bei einem starren Netz durch Messung der Netzspannung und bei einem weichen bzw. schwachen Netz durch Erfassung eines manuell eingegebenen Wertes der Nennspannung in die Steuereinrichtung erfolgen. Anschließend wird, ausgehend von einem Wert der erzeugten Wechselspannung, d.h. der Ausgangsspannung des Wandlers, der kleiner ist als die Nennspannung, die von dem Wandler erzeugte Wechselspannung in Richtung zu der Nennspannung geführt. Der Wandler wird somit spannungsgeführt und der in das Wechselstromnetz fließende Strom bestimmt sich durch die Impedanz des Netzes.

Die Steuerungseinrichtung führt hierbei die Wechselspannung zum einen nur soweit, bis die Nennspannung des Wechselstromnetzes erreicht wird. Hierdurch können unzulässige Belastungen von Komponenten des Wechselstromnetzes, die auf die Nennspannung ausgelegt sind, vermieden werden. Die Steuerungseinrichtung führt die Wechselspannung zum anderen aber auch nur soweit, bis ein Grenzwert für den von dem Wandler erzeugten Wechselstrom erreicht wird. Falls möglich, versucht die Steuereinrichtung somit die Wechselspannung bis zu der Nennspannung des Netzes zu führen. Hierbei besteht allerdings die Gefahr einer thermisch unzulässigen Belastung des Bennstoffzellenblocks. Das Ansteigen der Wechselspannung wird deshalb beendet, wenn ein Grenzwert für den von dem Wandler erzeugten Wechselstrom, d.h. den Ausgangsstrom des Wandlers, überschritten wird. Der Ausgangsstrom des Wandlers ist ein Maß für die thermische Belastung des Brennstoffzellenblocks und der Grenzwert kann so gewählt werden, dass dessen Überschreiten zu einer thermisch unzulässigen Belastung des Brennstoffzellenblocks führen würde.

Im Ergebnis stellt sich durch das Verfahren unter Berücksichtigung der Belastbarkeit der Brennstoffzellen und der Netznennspannung automatisch die maximal mögliche Ausgangsspannung bei dem Wandler ein, die auch mit einer entsprechend maximal möglichen Abgabe elektrischer Leistung verbunden ist. Wird die Nennspannung erreicht, ohne dass der Grenzwert für den von dem Wandler erzeugten Wechselstrom erreicht ist, kann bei gleichbleibender Ausgangsspannung noch auf eine Stromsteuerung bis zur Höhe des Grenzwertes für den Ausgangsstrom umgeschaltet werden.

Erfindungsgemäß wird zur Bestimmung der Nennspannung des Wechselstromnetzes durch die Steuereinrichtung die Spannung des Wechselstromnetzes erfasst, mit in der Steuereinrichtung gespeicherten normierten Nennspannungswerten vergleicht und der nächst höhere normierte Nennspannungswert als Nennspannung des Wechselstromnetzes ausgewählt. Dies ist insbesondere zur Bestimmung der Nennspannung bei weichen bzw. schwachen Netzen, z.B. Inselnetzen, wie sie an Bord von Schiffen vorliegen, geeignet. In derartigen Netzen kann die Netzspannung bei großen Stromflüssen auf Werte unterhalb der Nennspannung fallen. Eine Bestimmung der Nennspannung alleine anhand der gemessenen Netzspannung würde deshalb zu falschen Ergebnissen führen. Durch Vergleich mit in der Steuereinrichtung gespeicherten normierten Nennspannungswerten und Wahl des nächst höheren normierten Nennspannungswert als Nennspannung des Wechselstromnetzes kann eine Steuerung der Ausgangsspannung des Wandlers auf die korrekte Nennspannung sichergestellt werden.

Alternativ kann zur Bestimmung der Nennspannung des Wechselstromnetzes die Steuereinrichtung einen Wert für die Nennspannung über eine Eingabeeinheit erfassen. Diese Alternative ist vorteilhaft, wenn es sich bei dem Wechselstromnetz um ein unbekanntes Netz mit einer möglicherweise ungewöhnlichen Nennspannung handelt.

Bevorzugt wird zusätzlich durch die Steuereinrichtung die Frequenz des Wechselstromnetzes bestimmt und die Frequenz der Ausgangsspannung des Wandlers mit dieser Frequenz synchronisiert.

Ein erfindungsgemäßes Brennstoffzellensystem umfasst einen Brennstoffzellenblock zur Erzeugung einer Gleichspannung, einen Wandler zur Umwandlung der Gleichspannung in eine Wechselspannung zur Spannungsversorgung eines Wechselstromnetzes und eine Steuereinrichtung zur Steuerung der Ausgangsspannung des Wandlers. Die Steuereinrichtung ist hierbei derart eingerichtet, dass durch sie die Nennspannung des Wechselstromnetzes bestimmbar und anschließend, ausgehend von einem Wert der Ausgangsspannung, der kleiner ist als die Nennspannung, die Ausgangsspannung des Wandlers in Richtung zu der Nennspannung führbar ist, wobei die Ausgangsspannung nur soweit führbar ist, bis die Nennspannung des Wechselstromnetzes oder ein Grenzwert für den Ausgangsstrom des Wandlers erreicht ist,
wobei zur Bestimmung der Nennspannung des Wechselstromnetzes durch die Steuereinrichtung die Spannung des Wechselstromnetzes erfassbar, mit in der Steuereinrichtung gespeicherten normierten Nennspannungswerten vergleichbar und der nächst höhere normierte Nennspannungswert als Nennspannung des Wechselstromnetzes auswählbar ist, oder die Steuereinrichtung mit einer Eingabeeinheit zur Eingabe und Erfassung eines Wertes für die Nennspannung verbunden ist.

Die für das erfindungsgemäße Steuerverfahren genannten Vorteile und vorteilhaften Ausgestaltungen gelten entsprechend auch für das erfindungsgemäße Brennstoffzellensystem.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigen:
- FIG 1: ein erfindungsgemäßes Brennstoffzellensystem und. '
- FIG 2: zwei Beispiele für Strom-/Spannungsverläufe gemäß dem erfindungsgemäßen Steuerverfahren.

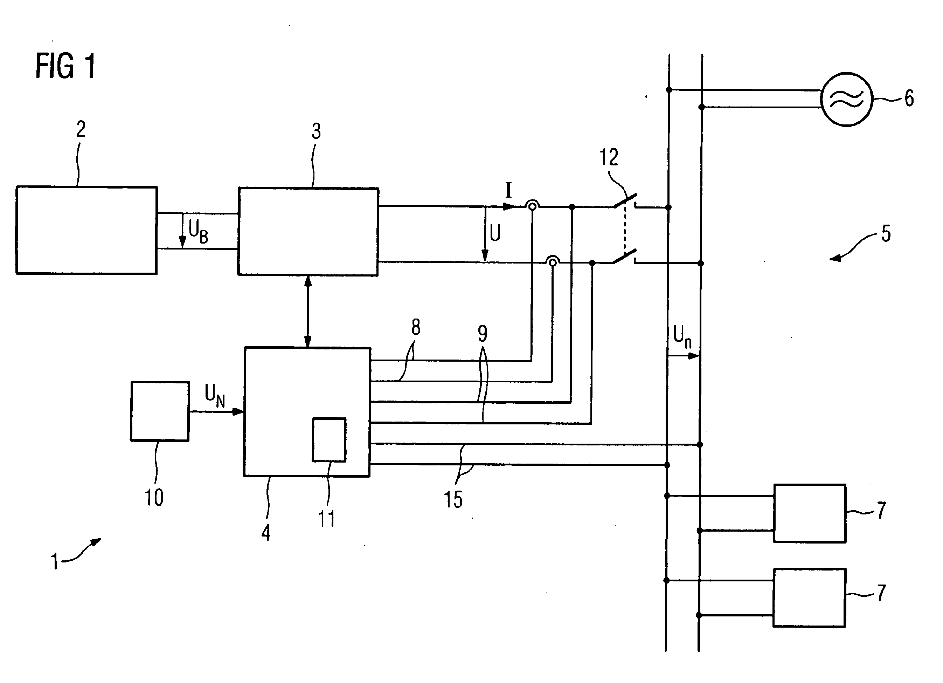

Ein in FIG 1 vereinfacht dargestelltes Brennstoffzellensystem 1 umfasst einen Brennstoffzellenblock 2, einen mit dem Brennstoffzellenblock 2 verbundenen Wandler 3 zur Erzeugung einer Wechselspannung aus der von dem Brennstoffzellenblock 2 erzeugten Gleichspannung U_{B} und eine Steuereinrichtung 4 zur Steuerung der von dem Wandler erzeugten Wechselspannung, d.h. der Ausgangsspannung U des Wandlers 3. Die Steuereinrichtung 4 ist zur Erfassung der Ausgangsspannung U und des Ausgangsstromes I des Wandlers 3 mit dessen Ausgang über Leitungen 8, 9 verbunden.

Durch die Brennstoffzellen des Brennstoffzellenblocks 2 wird eine Gleichspannung U_{B} erzeugt, die von dem Wandler 3 in eine Wechselspannung zur Spannungsversorgung eines Wechselstromnetzes 5 umgewandelt wird. Bei dem Wechselstromnetz 5 handelt es sich beispielsweise um ein Bordnetz eines Schiffes. Das Wechselstromnetz 5 ist im dargestellten Ausführungsbeispiel zweiphasig, könnte aber auch mehrphasig sein. Bei dem Wandler 3 handelt es sich beispielsweise um einen Wechselrichter, dessen Ausgangsspannung und -frequenz mit Hilfe einer Pulsweitenmodulation eingestellt wird. Dem Fachmann sind hierzu aber auch eine Reihe alternativer Wandlertechnologien bekannt. Dem Wechselrichter kann hierbei auch noch ein Transformator nachgeschaltet sein.

Das Wechselstromnetz 5 wird von einer Spannungsquelle 6, z.B. einem Dieselgenerator, gespeist und dient zur Versorgung verschiedenster Verbraucher 7, wie z.B. Lüftungs- und Klimaanlagen des Schiffes oder von Kühlcontainern an Bord des Schiffes.

Das Brennstoffzellensystem 1 ist ein transportables, Brennstoffzellensystem, das zum Beispiel in einem Transportcontainer untergebracht ist und zur Spannungsversorgung unterschiedlicher Wechselstromnetze mit jeweils unterschiedlicher Nennspannung und Nennfrequenz nutzbar ist. So soll es z.B. zur Speisung eines Netzes mit 115V 60Hz, eines Netzes mit 230V 50Hz oder eines dreiphasigen Netzes mit 400V 50Hz benutzbar sein. Im gezeigten Ausführungsbeispiel handelt es sich beispielsweise um ein zweiphasiges Netz mit einer Nennspannung von 230V bei 50Hz.

Wird das Brennstoffzellensystem 1 an Bord eines Schiffes installiert, ist der genaue Wert der Nennspannung U_{N} und Nennfrequenz fN des Netzes 5 nicht bekannt. Handelt es sich bei dem Netz 5 um ein weiches Netz so beträgt die Netzspannung Uₙ unter Umständen deutlich weniger als die Nennspannung des Netzes 5. Um an dem Ausgang des Wandlers 3 nun eine für die Speisung des Netzes 5 geeignete Ausgangsspannung U einstellen zu können, muss in einem ersten Schritt die Nennspannung U_{N} des Netzes 5 bestimmt werden. Handelt es sich bei dem Netz 5 um ein bekanntes Netz mit einer üblichen Nennspannung, so kann zur Bestimmung der Nennspannung die Spannung Uₙ des Wechselstromnetzes 5 erfasst, mit in einem Speicher 11 der Steuereinrichtung 4 gespeicherten normierten Nennspannungswerten verglichen und der nächst höhere Nennspannungswert als Nennspannung U_{N} des Wechselstromnetzes 5 ausgewählt werden. Zur Erfassung der Netzspannung und -frequenz ist die Steuereinrichtung 4 über Leitungen 15 mit dem Netz 5 verbunden.

Alternativ kann zur Bestimmung der Nennspannung U_{N} bei einem Wechselstromnetz 5 mit unüblichen Nennspannungswerten die Nennspannung U_{N} von einem Betreiber des Brennstoffzellensystems 1 auch manuell in eine mit der Steuereinrichtung 4 verbundene Eingabeeinheit eingegeben und über die Eingabeeinheit 10 von der Steuereinrichtung 4 erfasst werden.

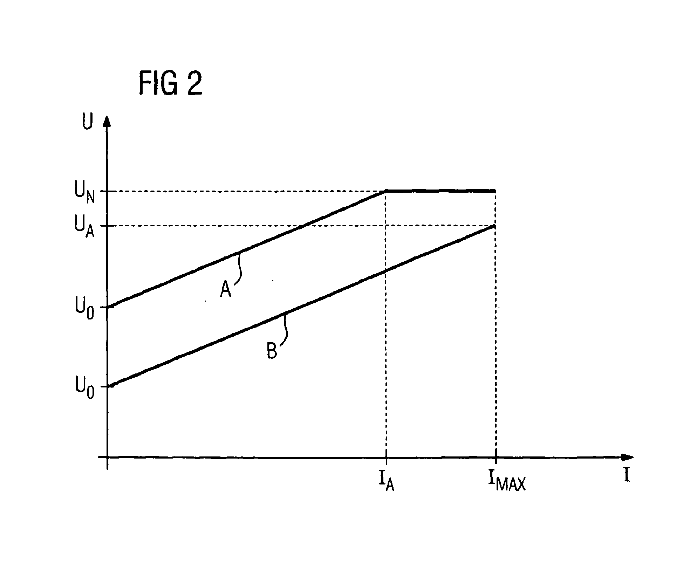

Wird das Brennstoffzellensystem 1 nun durch Schließen eines Netzschalters 11 an das Wechselstromnetz 5 angeschlossen, so wird - wie in FIG 2 veranschaulicht - ausgehend von einem Wert U₀ für die Ausgangsspannung U, der sich durch die aktuelle Netzspannung bei Zuschalten des Wandlers 3 bestimmt, durch die Steuerungseinrichtung 4 die Ausgangsspannung U des Wandlers 3 in Richtung zu der Nennspannung U_{N} des Wechselstromnetzes 5 geführt. Die Steuerung der Ausgangsspannung U des Wandlers 3 durch die Steuereinrichtung 4 erfolgt somit spannungsgeführt. Der in das Wechselstromnetz 5 fließende Strom I bestimmt sich hierbei durch die Impedanz des Netzes 5.

Die Steuerungseinrichtung 4 führt hierbei die Ausgangsspannung U jedoch nur soweit, bis die Nennspannung U_{N} des Wechselstromnetzes 5 oder ein Grenzwert Imax für den Ausgangsstrom I des Wandlers 3 erreicht wird. Durch die Begrenzung auf die Nennspannung U_{N} werden unzulässige Belastungen von Komponenten des Netzes 5 vermieden. Der Grenzwert Imax für den Ausgangsstrom I des Wandlers 3 ist derart gewählt, dass ein Überschreiten eine thermisch unzulässige Belastung des Brennstoffzellenblocks 2 bedeuten würde.

Falls bei Erreichen der Nennspannung U_{N} der Grenzwert Imax für den Strom noch nicht erreicht ist, kann bei gleichbleibender Ausgangsspannung U= U_{N} der Ausgangsstrom I des Wandlers 3 noch bis zu dem Grenzwert Imax angehoben werden.

Der Wandler 3 wird somit derart angesteuert, dass er im ersten Schritt spannungsgesteuert stets versucht, die Nennspannung U_{N} des Netzes 5 zu erreichen. Wird die Nennspannung U_{N} erreicht, wird bei gleich bleibender Ausgangsspannung U = U_{N} auf eine Stromsteuerung bis zur Höhe des Grenzwertes Imax für den Ausgangsstrom I umgeschaltet.

Weiterhin wird durch die Steuereinrichtung 4 über die Messleitungen 15 die Frequenz des Wechselstromnetzes 5 bestimmt und die Frequenz der Ausgangsspannung U des Wandlers 3 mit dieser Frequenz synchronisiert.

Es wird somit eine optimale Anpassung des Brennstoffzellensystems an das Wechselstromnetz 5 für eine maximale Leistungsabgabe erzielt, wobei ein Schutz der Brennstoffzellen vor thermischer Überlastung gegeben ist.

FIG 2 zeigt zwei unterschiedliche Strom-Spannungsverläufe für den Ausgangsstrom I und die Ausgangsspannung U des Wandlers 3. Im Fall des Strom-/Spannungsverlaufes A wird die Ausgangsspannung U des Wandlers 3 ausgehend von der Spannung U0 bis zu der Nennspannung U_{N} geführt. Bei Erreichen der Nennspannung U_{N} beträgt der Ausgangsstrom I = I_{A}. Da I_{A} < Imax, ist danach noch eine Stromsteuerung bis zum Erreichen des maximal zulässigen Stromes Imax für den Ausgangsstrom I des Wandlers 3 möglich. Im Fall des Strom-/Spannungsverlaufes B wird die Ausgangsspannung U des Wandlers 3 nur bis zu einer Spannung U_{A} geführt, da bei dieser Spannung bereits der Grenzwert Imax für den Strom erreicht wird.

## Patentansprüche

1. Steuerverfahren für ein Brennstoffzellensystem (1) umfassend einen Brennstoffzellenblock (2) zur Erzeugung einer Gleichspannung (U_{B}), einen Wandler (3) zur Umwandlung der Gleichspannung (U_{B}) in eine Wechselspannung (U) zur Spannungsversorgung eines Wechselstromnetzes (5) und eine Steuereinrichtung (4) zur Steuerung der von dem Wandler (3) erzeugten Wechselspannung (U), wobei die Steuerungseinrichtung (4) die Nennspannung (U_{N}) des Wechselstromnetzes (5) bestimmt und danach, ausgehend von einem Wert der erzeugten Wechselspannung (U), der kleiner ist als die Nennspannung (U_{N}), die von dem Wandler (3) erzeugte Wechselspannung (U) in Richtung zu der Nennspannung (U_{N}) führt, **dadurch gekennzeichnet, dass** die Steuerungseinrichtung (4) die Wechselspannung (U) nur soweit führt, bis die Nennspannung (U_{N}) des Wechselstromnetzes (5) oder ein Grenzwert (Imax) für den von dem Wandler (3) erzeugten Wechselstrom (I) erreicht wird, wobei zur Bestimmung der Nennspannung (U_{N}) des Wechselstromnetzes (5) die Steuereinrichtung (4) die Spannung (Uₙ) des Wechselstromnetzes (5) erfasst, mit.in der Steuereinrichtung (4) gespeicherten normierten Nennspannungswerten vergleicht und den nächst höheren normierten Nennspannungswert als Nennspannung (U_{N}) des Wechselstromnetzes (5) auswählt, oder einen Wert für die Nennspannung (U_{N}) über eine Eingabeeinheit (10) erfasst.

2. Steuerverfahren nach Anspruch 1, **dadurch gekennzeichnet, dass** durch die Steuereinrichtung (4) die Frequenz (f) des Wechselstromnetzes (5) bestimmt und die Frequenz der Ausgangsspannung (U) des Wandlers (3) mit dieser Frequenz synchronisiert wird.

3. Brennstoffzellensystem (1) umfassend einen Brennstoffzellenblock (2) zur Erzeugung einer Gleichspannung (U_{B}), einen Wandler (3) zur Umwandlung der Gleichspannung (U_{B}) in eine Wechselspannung (U) zur Spannungsversorgung eines Wechselstromnetzes (5) und eine Steuereinrichtung (4) zur Steuerung der von dem Wandler (3) erzeugten Wechselspannung (U), **dadurch gekennzeichnet, dass** die Steuereinrichtung (4) derart eingerichtet ist, dass durch sie die Nennspannung (U_{N}) des Wechselstromnetzes (5) bestimmbar und anschließend, ausgehend von einem Wert der Wechselspannung (U), der kleiner ist als die Nennspannung (U_{N}), die von dem Wandler erzeugte Wechselspannung (U) in Richtung zu der Nennspannung (U_{N}) führbar ist, **dadurch gekennzeichnet, dass** die Wechselspannung (U) nur soweit führbar ist, bis die Nennspannung (U_{N}) des Wechselstromnetzes (5) oder ein Grenzwert (Imax) für den von dem Wandler (3) erzeugten Wechselstrom (I) erreicht ist, wobei zur Bestimmung der Nennspannung (U_{N}) des Wechselstromnetzes (5) durch die Steuereinrichtung (4) die Spannung (Uₙ) des Wechselstromnetzes (5) erfassbar, mit in der Steuereinrichtung (4) gespeicherten normierten Nennspannungswerten vergleichbar und der nächst höhere normierte Nennspannungswert als Nennspannung (U_{N}) des Wechselstromnetzes (5) auswählbar ist, oder die Steuereinrichtung (4) mit einer Eingabeeinheit (10) zur Eingabe und Erfassung eines Wertes für die Nennspannung (U_{N}) verbunden ist.

4. Brennstoffzellensystem (1) nach Anspruch 3, **dadurch gekennzeichnet, dass** die Steuereinrichtung (4) derart eingerichtet ist, dass die Frequenz des Wechselstromnetzes (5) bestimmbar und die Frequenz der von dem Wandler (3) erzeugten Wechselspannung (U) mit dieser Frequenz synchronisierbar ist.

## Claims

1. Control method for a fuel cell system (1) comprising a fuel cell block (2) for generating a direct current voltage (U*_{B}*), a converter (3) for converting the direct current voltage (U*_{B}*) into an alternating voltage (U) for supplying power to an alternating current network (5) and a control facility (4) for controlling the alternating voltage (U) generated by the converter (3), with the control facility (4) determining the nominal voltage (U*_{N}*) of the alternating current network (5) and then, based on a value of the generated alternating voltage (U) which is smaller than the nominal voltage (U*_{N}*), conveying the alternating voltage (U) generated by the converter (3) in the direction of the nominal voltage (U*_{N}*), **characterized in that** the control facility (4) conveys the alternating voltage (U) only until the nominal voltage (U*_{N}*) of the alternating current network (5) or a limit value (Imax) is achieved for the alternating current (I) generated by the converter (3), with, in order to determine the nominal voltage (U*_{N}*) of the alternating current network (5), the control facility (4) detecting the voltage (U*_{N}*) of the alternating current network (5), comparing it with the standardised nominal voltage values stored in the control facility (4) and selecting the next highest standardised nominal voltage value as a nominal voltage (U*_{N}*) of the alternating current network (5) or detecting a value for the nominal voltage (U*_{N}*) by way of an input unit (10).

2. Control method according to claim 1, **characterized in that** the control facility (4) determines the frequency (f) of the alternating current network (5) and the frequency of the output voltage (U) of the converter (3) is synchronized with this frequency.

3. Fuel cell system (1) comprising a fuel cell block (2) for generating a direct current voltage (U*_{B}*), a converter (3) for converting the direct current voltage (U*_{B}*) into an alternating voltage (U) for supplying voltage to an alternating current network (5) and a control facility (4) for controlling the alternating voltage (U) generated by the converter (3), **characterised in that** the control facility (4) is set up such that it can determine the nominal voltage (U*_{N}*) of the alternating current network (5) and then, based on a value of the alternating voltage (U) which is smaller than the nominal voltage (U*_{N}*), can convey the alternating voltage (U) generated by the converter in the direction of the nominal voltage (U*_{N}*), **characterized in that** the alternating voltage (U) can only be conveyed until the nominal voltage (U*_{N}*) of the alternating current network (5) or a limit value (Imax) is reached for the alternating current (I) generated by the converter (3), with it being possible, in order to determine the nominal voltage (U*_{N}*) of the alternating current network (5) by means of the control facility (4), to detect the voltage (U*_{N}*) of the alternating current network (5), to compare it with standardised nominal voltage values stored in the control facility (4) and to select the next highest standardised nominal voltage value as the nominal voltage (U*_{N}*) of the alternating current network (5), or the control facility (4) is connected to an input unit (10) in order input and detect a value for the nominal voltage (U*_{N}*).

4. Fuel cell system (1) according to claim 3, **characterized in that** the control facility (4) is set up such that the frequency of the alternating current network (5) can be determined and the frequency of the alternating voltage (U) generated by the converter (3) can be synchronised with this frequency.

## Revendications

1. Procédé de commande d'un système ( 1 ) de piles à combustible, comprenant un bloc ( 2 ) de piles à combustible pour la production d'une tension U_{B} continue, un transformateur ( 3 ) pour transformer la tension U_{B} continue en une tension U alternative pour l'alimentation en tension d'un réseau ( 5 ) en courant alternatif et un dispositif ( 4 ) de commande pour la commande de la tension U alternative produite par le transformateur ( 3 ), le dispositif ( 4 ) de commande déterminant la tension UN nominale du réseau ( 5 ) en courant alternatif et ensuite, à partir d'une valeur de la tension U alternative produite qui est plus basse que la tension UN nominale, faisant tendre la tension U alternative produite par le transformateur ( 3 ) vers la tension UN nominale, **caractérisé en ce que** le dispositif ( 4 ) de commande ne fait tendre la tension U alternative que jusqu'à ce que la tension UN nominale du réseau ( 5 ) en courant alternatif ou une valeur Imax limite du courant I alternatif produit le transformateur ( 3 ) soit atteinte, dans lequel, pour la détermination de la tension UN nominale du réseau ( 5 ) en courant alternatif, le dispositif ( 4 ) de commande détecte la tension U_{N} du réseau ( 5 ) en courant alternatif, la compare à des valeurs de tension nominale normées et mémorisées dans le dispositif ( 4 ) de commande et choisit la valeur de la tension nominale normée immédiatement la plus haute comme tension UN nominale du réseau ( 5 ) en courant alternatif ou détecte une valeur de la tension UN nominale par une unité ( 10 ) d'entrée.

2. Procédé de commande suivant la revendication 1, **caractérisé en ce qu'**on détermine la fréquence N du réseau ( 5 ) en courant alternatif par le dispositif ( 4 ) de commande et on synchronise la fréquence de la tension U de sortie du transformateur ( 3 ) avec cette fréquence.

3. Système ( 1 ) de piles à combustible, comprenant un bloc ( 2 ) de piles à combustible pour la production d'une tension U_{B} continue, un transformateur ( 3 ) pour la transformation de la tension U_{B} continue en une tension U alternative pour l'alimentation en tension d'un réseau ( 5 ) en courant alternatif et un dispositif ( 4 ) de commande pour commander la tension U alternative produite par le transformateur ( 3 ), **caractérisé en ce que** le dispositif ( 4 ) de commande est tel que par lui la tension UN nominale du réseau ( 5 ) en courant alternatif peut être déterminée et ensuite, en partant d'une valeur de la tension U alternative qui est plus basse que la tension UN nominale, on peut faire tendre vers la tension UN nominale la tension ( 1 ) U alternative produite par le transformateur, **caractérisé en ce qu'**on ne peut faire tendre la tension U alternative que jusqu'à ce que la tension UN nominale du réseau ( 5 ) en courant alternatif ou une valeur Imax limite du courant I alternatif produit par le transformateur soit atteinte, dans lequel pour la détermination de la tension UN nominale du réseau ( 5 ) en courant alternatif on peut détecter par le dispositif ( 4 ) de commande la tension U_{N} du réseau ( 5 ) en courant alternatif, on peut la comparer à des valeurs de tension nominales normées et mémorisées dans le dispositif ( 4 ) de commande et on peut choisir comme tension UN nominale du réseau ( 5 ) en courant alternatif la valeur de tension nominale normée immédiatement la plus haute ou le dispositif ( 4 ) de commande est relié à une unité ( 10 ) d'entrée pour l'entrée et la détection d'une valeur de la tension UN nominale.

4. Système ( 1 ) de piles à combustible suivant la revendication 3, **caractérisé en ce que** le dispositif ( 4 ) de commande est tel que la fréquence du réseau ( 5 ) en courant alternatif peut être déterminée et que la fréquence de la tension U alternative produite par le transformateur ( 3 ) peut être synchronisée à cette fréquence.
